Europäisches Patentamt

European Patent Office

Office européen des brevets

(19)

(11) **EP 1 482 447 A1**

(12) **EUROPEAN PATENT APPLICATION**

(43) Date of publication:
**01.12.2004 Bulletin 2004/49**

(51) Int Cl.⁷: **G06T 5/40**

(21) Application number: **03012381.4**

(22) Date of filing: **30.05.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Sony International (Europe) GmbH
10785 Berlin (DE)**

(72) Inventors:
• **Unruh, Christian,
c/o Stuttgart Technology Center
70327 Stuttgart (DE)**
• **Sartor, Piergiorgio, c/o Stuttgart Techn. Center
70327 Stuttgart (DE)**

(74) Representative: **Müller - Hoffmann & Partner
Patentanwälte,
Innere Wiener Strasse 17
81667 München (DE)**

(54) **Method of and apparatus for image histogram equalization**

(57)     The present invention relates to a method of applying histogram equalization to an image as well as to a corresponding apparatus or computer program product. In particular, the present invention relates to a method, apparatus or computer program product, wherein a degree of equalization is adapted as a function of a variance or standard deviation of the image or, for even better results, as a function of both an average picture level of the image as well as the variance or standard deviation of the image.

Fig. 3:

EP 1 482 447 A1

Description

**BACKGROUND OF THE INVENTION**

**Field of the invention**

The present invention relates to a method of applying histogram equalization to an image as well as to a corresponding apparatus or computer program product. In particular, the present invention relates to a method, apparatus or computer program product, wherein a degree of equalization is adapted as a function of both an average picture level of the image as well as a variance or standard deviation of the image.

**Description of the related prior art**

Histogram equalization has been widely investigated. U.S. patent 5,537,071, for example, discloses a method and circuit for dividing an input signal into amplitude segment signals and for non-linearly processing the amplitude segment signals, wherein a non-linear circuit having a transfer which is adjustable per amplitude segment of an input signal comprises a segmenting circuit for obtaining a plurality of amplitude segment signals from the input signal, a non-linear segment amplifier circuit coupled to the segmenting circuit for separately multiplying segments of the input signal by respective segment gain factors in dependence upon a common gain factor derived from the segment gain factors and on the basis of the amplitude segment signals for supplying a signal which is adjustable per amplitude segment of the input signal. The non-linear circuit may further comprise an output circuit coupled to the non-linear segment amplifier circuit for supplying an amplified output signal, the amplification of which with respect to the input signal being adjustable per amplitude segment of the input signal.

In accordance with the aforementioned patent, the histogram is divided into several segments and then integration is carried out over these segments. The enhancement amount is determined by a very small constant. A similar teaching is contained in product specification SAA4979H, Philips Semiconductor, April 2000.

U.S. patent 5,581,370 discloses image-dependent automatic area of interest enhancement, in particular a method of improving the contrast in a natural scene image, wherein a relevant histogram of the image is derived from a selected subset of local histograms representing regions of the image. The signal describing the histogram is operated on with a filter having the characteristic of weakening strong peaks and valleys in the function, but not effecting flat portions of the signal. The filtered histogram signal is used for controlling the TRC mapping in a device at which the image is to be printed. To assure optimum selection of local histograms, regions including the black point and white point of an image are determined and added to the subset of local histograms representing regions of the image.

In accordance with the method of latter patent, the strong histogram valleys and peaks, denoted by H(i), are weakened by a function $[H(i)]^{1/N}$ with N>2. Moreover, the enhancement amount is also controlled by a constant.

EP 1 022 679 A2 discloses a method of operating a computer to produce contrast enhanced digital images that produces a histogram having a first axis corresponding to a measurable property (e.g., luminance) and a second axis corresponding to a count of particular value for the measurable property. This histogram is divided into clusters and histogram equalization or stretching is performed on each cluster to modify the histogram. The modified histogram is used to adjust the value of the first measurable property to enhance an image contrast. The histogram is divided into clusters using a pattern matching technique, Gaussian distributions and uniform distributions being separated into individual clusters.

WO 01/26054 A2 discusses a system and method for improving the uniformity in exposure and tone of a digital image using a locally adapted histogram equalization approach. This approach involves first segmenting the digital image into a plurality of image patches. For each of these patches, a pixel brightness level histogram is created. The histogram for each patch is then optionally averaged with the histograms associated with a prescribed number of neighboring image patches. A normalized cumulative distribution function is generated for each patch based on the associated averaged histogram. This normalized cumulative distribution function identifies a respective new pixel brightness level for each of the original pixel brightness levels. For each of the original pixel brightness levels, the associated new pixel brightness levels from one or more of the image patches are blended. Preferably, this blending is accomplished using either a bilinear or biquadratic interpolator function. Finally, for each image patch, the original pixel brightness level of each pixel in the image patch is replaced with the blended pixel brightness level corresponding to that original brightness level. A further refinement is discussed to mitigate the effects of noise caused by areas of a single color in the scene depicted in patch. In one embodiment, this refinement entails employing a partial equalization approach. In another embodiment, the refinement entails limiting the gain exhibited by any of the blended pixel brightness levels associated with an image patch, in comparison to its associated original pixel brightness level, to a prescribed level.

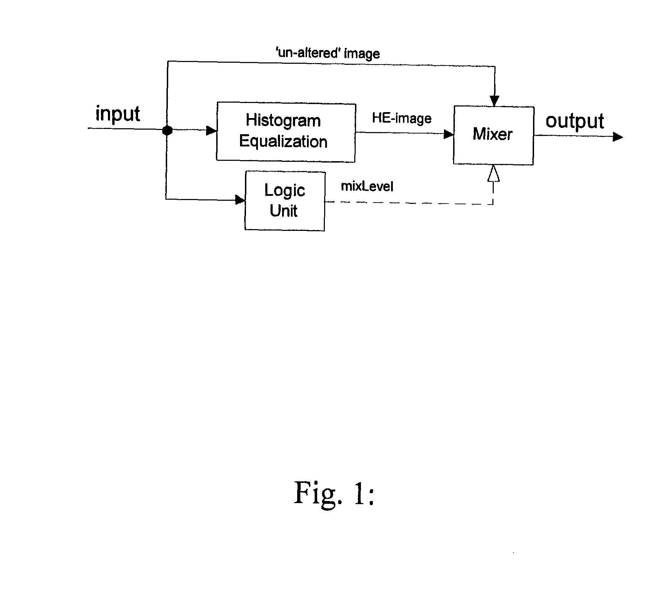

A conventional approach for histogram equalization is shown in Figure 1. The image processing configuration 100 shown in that figure comprises a histogram equalization unit 10, a logic unit 20 and a mixer 30. An input signal, *e.g.* pixels of an image to which histogram equalization is to be applied, is sent to the histogram equalization unit, the logic unit and the mixer. Based on one or more input signals, the histogram equalization unit computes and outputs a processed signal, *e.g.* a histogram equalized image, that is sent to the mixer. Parallel thereto, the input signal is evaluated in the logic unit to derive a mix level signal that is provide to the mixer. The mixer then mixes the input signal, *e. g.* an unaltered image, and the processed signal, *e.g.* a histogram equalized image, at a ratio determined by the mix level signal, *e.g.* linearly proportionally, to generate an output signal.

For the depicted example, the output signal can be expressed mathematically as follows:

$$output = (1\text{-mixLevel}) \bullet \text{'un-altered' image} + mixLevel \bullet \text{HE-image}$$

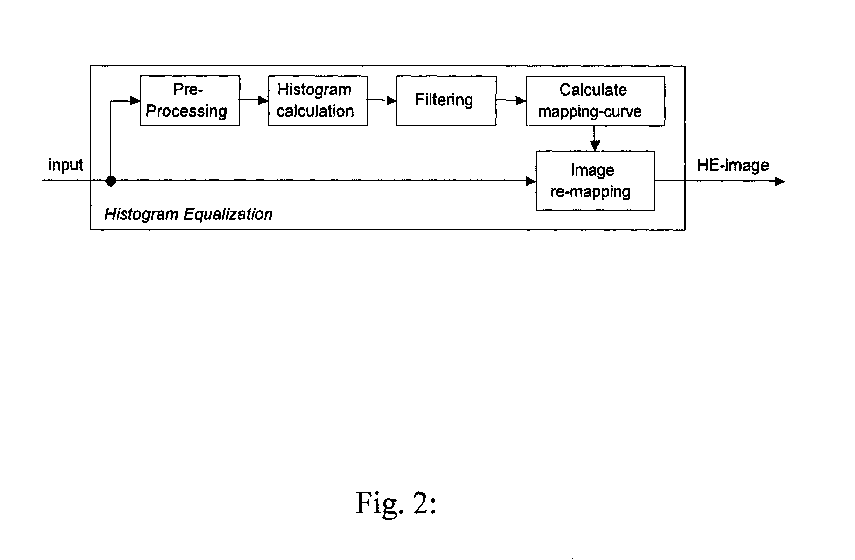

The histogram equalization unit 10 shown in Figure 1 typically comprises the conventional configuration shown in Figure 2. In accordance therewith, the input signal is direct to a pre-processing unit 11 where it undergoes pre-processing, *e.g.* low-pass filtering and/or edge detection and/or other filtering. The pre-processed data is then subjected to histogram calculation in a histogram calculation unit 12. A conventional histogram calculation technique comprises counting, pixel by pixel, the number of occurrences of each grey level, *i.e.* level of luminance, in an image. The calculated histogram data can be represented as a histogram or as a cumulative distribution function, both of which are well known in the art. The histogram data can be then passed through a filtering block 13, *e.g.* a low-pass filter or a zero-phase forward and backward digital filter, for removing undesired artifacts such as high frequency noise resulting from inaccurate analog to digital conversion of individual pixels of the image. The thus filtered histogram data is then used to calculate a mapping curve in a mapping curve calculation unit 14. Lastly, the input image is re-mapped, *i.e.* histogram equalized, on the basis of the calculated mapping curve in an image re-mapping unit 15 and output as a histogram equalized image. All of the above steps are well known in the art.

Unpublished European patent application number 02 004 428.5, the contents of which are incorporated herein by reference, filed on February 26, 2002 in the name of the same applicant as the present application and entitled "Contrast Enhancement for Digital Images," discloses a histogram smoothing technique employing a low-pass filter in the frequency domain or a zero-phase forward and reverse digital filtering, wherein the enhancement amount is adapted to the image mean value, as denoted as the average picture level. This technique is based on the realization that histogram equalization is effective for improving the quality of images having poor contrast, yet sometimes degrades images of good quality, and that poor lighting conditions, i.e. too bright or too dark, cause low contrast images. The technique causes low contrast images to be enhanced more than high contrast images.

For some synthetic images, *e.g.* images having a uniformly dark background with or without bright running titles, image artifacts, *e.g.* MPEG artifacts, noise and/or quantization errors, are sometimes made more visible by conventional histogram equalization methods including the aforementioned techniques and methods.

In view of the aforementioned deficiencies of the prior art, it is an object of the invention to provide an improved method of and apparatus for applying histogram equalization to an image that overcomes these deficiencies of the prior art.

**SUMMARY OF THE INVENTION**

In its broadest aspect, the invention can be seen in a method of applying histogram equalization to an image, wherein a degree of equalization is adapted as a function of a variance or standard deviation of one or more images.

Likewise, the invention can be seen in an apparatus for applying histogram equalization to an image, comprising controlling means configured and adapted to adapt a degree of equalization as a function of a variance or standard deviation of one or more images.

As noted above, histogram equalization (HE) is well known to the art of image processing. The application of histogram equalization to an image in the sense of the invention can comprise any of the numerous steps known in the art. These include, but not limited to, the mixing of histogram equalized image data to non-equalized image data, the calculation of a histogram equalization mapping curve and subsequent histogram equalization of the image based thereon, etc.

Examples of such techniques were cited in the introduction above. However, the invention is not limited to such techniques. For example, the ratio with which an unaltered image is mixed to an HE image need not depend on the mixing level in a linear manner. Moreover, the pre-processing and filtering techniques discussed above are meant solely to be exemplary. They are not only optional, but may also be modified in numerous ways, as is known in the art.

The inventors of the present invention have discovered that the variance / the standard deviation of many synthetic images behaves differently than that of natural images and tend to be either very large or very small. Moreover, by adapting a degree of equalization as a function of both an average picture level of one or more images as well as a variance or standard deviation of one or more images, the aforementioned undesirable enhancement of artifacts can be combatted. For example, if the image variance is very large or very small, the histogram equalization can be turned off, or the amount of histogram equalization can be decreased so that any image artifacts already present in the image are not made even more prominent. In addition to the above, the inventors have discovered that histogram equalization based solely on the average picture level is not robust enough, in particular for image sequences portraying a white text running on a black background, whereas histogram equalization adapted with regard to the variance or standard deviation of one or more images is sufficiently robust for typical commercial applications.

The "one or more images" can include the image to which the histogram equalization is to be applied or consist solely of that image. Likewise, the "one or more images" can comprise or consist of any other images, *e.g.* images preceding said image in an image sequence.

The parameters on which computation of the variance / standard deviation is based preferably describe, *inter alia*, the region in which the 'real image / video content' is located. This means that those parameters define a so-called 'region of interest' (ROI) for which the computations are done. For example, in an image / image sequence (*e.g.* video) with an aspect ration other than 4:3, the 'active video' (region that contains information that, *e.g.* in terms of its size, can be displayed on any displaying device) usually is in a so-called letterbox format, meaning that black bars can be found at the top and bottom of the 'active video.' Within those black bars, the average picture level (APL) should be a constant value (black) and therefore typically does not contain any information with respect to the purpose of this invention. If those black bars were to be comprised by either of the average picture level or the variance / standard deviation computation, the results of the average picture level and the variance / standard deviation computations would not be as good as if those black bars had been excluded from the region on interest. Thus, it is preferable to base computation of the variance / standard deviation as well as the average picture level on parameters, in particular image parameters, that define the region of interest only and exclude any other regions within the 'real image / video' that would lead to an incorrect or misleading computation.

It is likewise preferable to base computation of the variance / standard deviation on the luminance of the image pixels within the region of interest, *e.g.* an area of active video. Luminance is an appropriate image parameter on which to base such computation due to its ready availability and its relevance to histogram equalization, which is typically primarily used to enhance dark regions of an image.

Preferably, the degree of equalization is adapted as a function of an average picture level of one or more images.

As noted above with regard to unpublished European patent application number 02 004 428.5 and as disclosed in detail therein, varying the amount of histogram equalization of an image as a function of a computed average picture level yields good results, albeit with some drawbacks *e.g.* with regard to the processing of synthetic images. These drawbacks, however, can be compensated by the techniques, *i.e.* the features, of the present invention. Moreover, the features of the present invention are advantageously combinable with any of the image processing techniques disclosed in EP application number 02 004 428.5. For the sake of brevity, those techniques are not described in further detail in the present application. Instead, explicit reference is made to the detailed disclosure of that document.

Preferably, the average picture level is determined from the whole of one or more images or from one or more selected regions of interest in one or more images.

The inventors of the present invention have discovered that good results can be achieved both when the average picture level is calculated from the whole of one or more images. This is a distinguishing feature over much of the prior art that teaches image processing based on parameters derived solely from selected regions of the image, as described above. However, this is not to say that the present invention does not yield good results when the average picture level is calculated from one or more selected regions of interest in one or more images. Consequently, when applying the teachings of the present invention, the person skilled in the art can choose whether they would prefer to calculate the APL from whole images, *i.e.* from a higher number of pixels, or whether they would prefer to invest calculating power into the computation of regions of interest, but save computational power with respect to the number of pixels to be evaluated for the APL.

Preferably, the histogram equalization is based on a histogram or a cumulative distribution function derived therefrom, wherein said histogram is calculated from the whole of one or more images, from one or more selected regions of interest in one or more images and/or from edge pixels of one or more images.

The general purpose of histogram equalization is typically to increase the contrast of an image / video signal. The contrast of an image / video signal is usually measured / estimated on the basis of 'how well object details can be seen / noticed.' Details usually are object boundaries and/or textures that have a high spatial frequency and therefore can be considered edges. The overall result of the histogram equalization can be improved significantly if only those picture elements (pixels) that contribute to or for those edges are taken into consideration, *i.e.* regarded during the computation, for the image / video histogram.

Preferably, the histogram or the cumulative distribution function is smoothed using a recursive low-pass filter, a cascaded low-pass filter and/or a zero-phase forward and backward low-pass filter.

A purpose of low-pass filtering the histogram is to smooth peaks and irregularities that, after the final equalization process is applied, can lead to contrast enhancement that is too strong and thus results in images that are perceived as overly artificial.

As noted above, the term "one or more images" employed in this specification can include the image to which the histogram equalization is to be applied or consist solely of that image. Likewise, the one or more images can comprise or consist of any other images, *e.g.* images preceding said image in an image sequence. Where used repeatedly, the term "one or more images" must not necessary refer to the same set of "one or more images."

Preferably, the application of histogram equalization comprises the mixing of histogram equalized image data to image data that has not been histogram equalized. Advantageously, the ratio with which equalized image data is mixed to non-equalized image data is limited to a predetermined minimum and/or to a predetermined maximum.

The mixing of equalized image data to non-equalized image data at least partially masks over artifacts that are a result of the equalization process. Unfortunately, however, it also masks over enhancements brought about by the equalization process and must therefore be employed sparingly.

By limiting the maximum / minimum amount of image restoration, the amount of enhancement and the masking of artifacts can be held to within reasonable bounds.

## BRIEF DESCRIPTION OF THE DRAWINGS

The novel features of the invention, as well as the invention itself, both as to its structure and its operation will be best understood from the accompanying figures, taken in conjunction with the accompanying description. The Figures show:

Fig. 1    a conventional configuration for histogram equalization;
Fig. 2    details of the histogram equalization of Figure 1;
Fig. 3    a robust logic unit in accordance with a first preferred embodiment of the invention; and
Fig. 4    a depiction of an exemplary function $f(APL, \sigma, U_{min}, U_{max})$ employable by the mixing level calculation unit of Figure 3.

## DESCRIPTION OF THE PREFERRED EMBODIMENTS

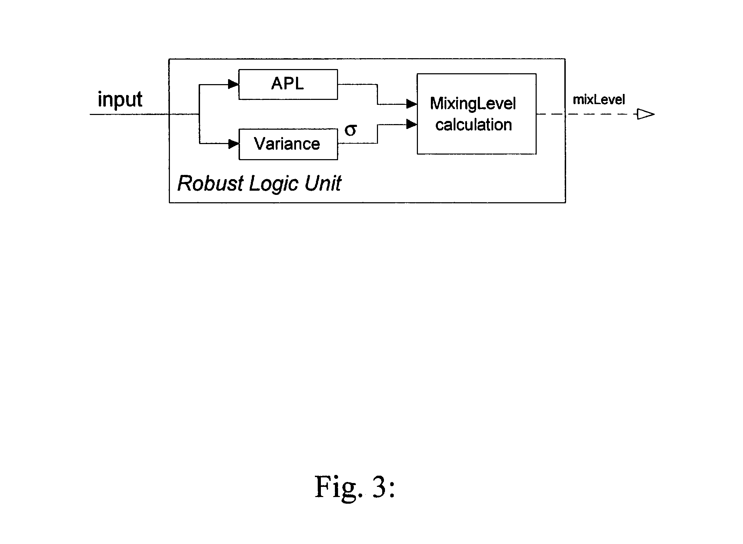

Figure 3 illustrates a robust logic unit 20' that is suitable for use in an image processing configuration for histogram equalization as shown in Figure 1, in place of the logic unit 20 shown therein.

In accordance with the embodiment depicted by the block diagram of Figure 3, the enhancement amount is adapted not only with respect to the average pixel level (APL), *i.e.* the mean luminance value of the pixels within the whole of one or more images or selected regions of interest thereof, but also with respect to a variance ($\sigma$) or a standard deviation of the respective images or regions of interest. Accordingly, an input signal is directed to both an APL computation unit 21 as well as a variance computation unit 22 for computing an APL and a variance / standard deviation, respectively. The output of the APL computation unit and the variance computation unit is passed on to a mixing level calculation unit 23 that determines an appropriate mixing level based on the computed APL and the computed variance / standard deviation. In addition to the APL and variance / standard deviation, the mixing level may also depend on other predetermined or calculated parameters such as a fixed maximum and/or minimum value. Such a relationship can be expressed mathematically, *e.g.* as:

$$mixLevel = f(APL, \sigma, U_{min}, U_{max})$$

where $U_{min}$ and $U_{max}$ are predetermined constants that limit a minimum and maximum value of the mixing level, respectively.

The mixing level output by the mixing level calculation unit that can be used as the mixing ratio between 'unaltered' image data and histogram equalized image data as described above, *e.g.* with reference to Figure 1. Such a technique enhances the image contrast while reducing the prominence of or eliminating image artifacts. Moreover, it is a robust technique due to the mixing level calculation unit.

The performance of current, state-of-the-art histogram equalization techniques is very sensitive to the presence of noise within an image / video. This means that the presence of noise can result in an incorrectly altered image. By taking the image variance / standard deviation into account, the presence of noise can be detected easily. Calculation of the mixing level on the basis of both the APL value and the variance / standard deviation makes the present invention robust against the presence of noise. Optionally, *a priori* assumptions or facts (*e.g.* with regard the resultant behavior of the histogram equalization for particular APL values, standard deviations, variances, categories of images, etc.)

may also contribute to the calculation or choice of the mixing level. For example, if the entire image / video is very dark, the APL value will be very low. There is little or no information about the noise level or the amount of image / video distortion due to noise since, for example, the same dark image / video with Gaussian distributed noise would result in the same APL value. If the amount of histogram equalization is only derived from the APL value, the mixing level could be too high, which would lead to an increase in distortion of the image / video. Thus, whereas systems based only on the APL value are very sensitive to noise and result in incorrect equalization, reliance on the variance / standard deviation, particular in addition to the APL, when calculating the mixing level yields a system that is highly robust against the presence of noise.

The overall quality of a histogram equalization technique such as that depicted in Figure 1 in conjunction with the robust logic unit of the present invention as shown in Figure 3 depends highly on the design, *i.e.* the parameters and the shape, of the function used, *e.g.* by the mixing level calculation unit of Figure 3, in the determination of an appropriate mixing level. Since investigations into the optimal design of such a function have yet to be decisively concluded, details regarding the design of such functions will be the subject of a later patent application.

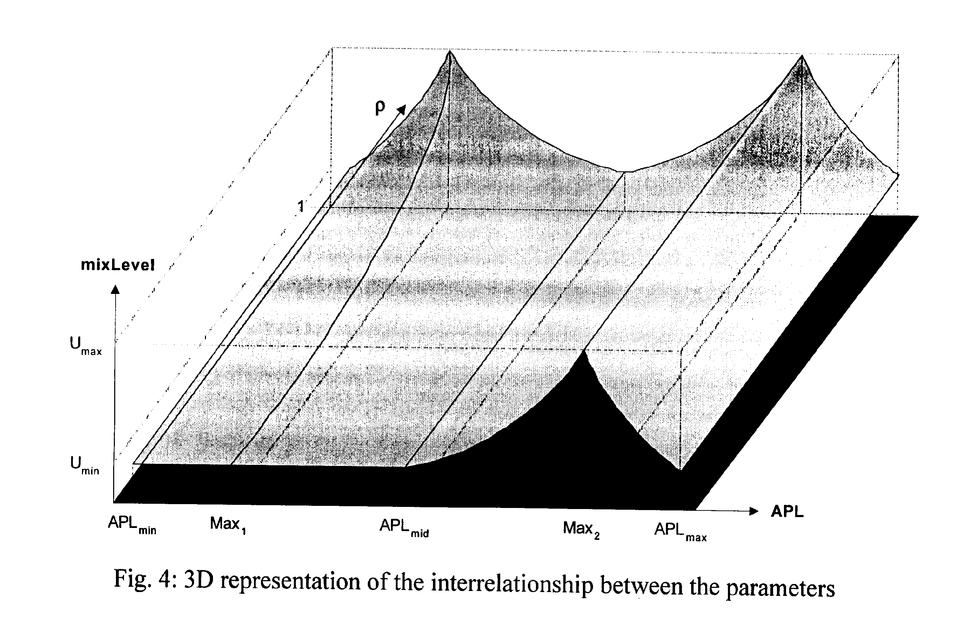

Figure 4 nonetheless depicts an exemplary function $f(APL, \sigma, U_{min}, U_{max})$ that has been determined to be advantageously employable by the mixing level calculation unit of Figure 3 in its determination of an appropriate mixing level. The figure names several specific points in accordance with naming conventions that will be explained herein-below.

$$\rho = 1 - \frac{\sigma^2}{\sigma_{max}^2}$$

Here $\sigma^2$ stands for the variance calculated *e.g.* from an image ROI, and $\sigma^2_{max}$ represent the maximal possible image variance, e.g. 255 x 255 / 4 for TV signals, or $(APL_{max} - APL_{min})$ x $(APL_{max} - APL_{min})$ / 4 for studio TV signals. Where $APL_{min}$ represents the minimum possible grey value that could occur (according to the 656 video-stream $APL_{min}$=16), and $APL_{max}$ represents the maximum possible grey value that could occure (according to the 656 video-stream $APL_{maX}$=235).

$$APL_{mid} = \frac{(APL_{min} + APL_{max})}{2}$$

The points $Max_1$ and $Max_2$ are symmetrical to the point $APL_{mid}$ and are calculable in advance.

To make the variance adaptation more efficiently, one can apply the square of $\rho$, i.e. $\rho^2$ to weight the histogram equalization enhancement amount (mixLevel). If the calculated variance is very large, $\rho$ or $\rho^2$ is very small. As result, the histogram equalization enhancement amount is also very small. However, $\rho$ or $\rho^2$ will be large, even approximate to one if the calculated variance is small. This is the case for images being of uniform background. For this kind of images, the image variance is only due to image noise and analog to digital conversion errors. To better adapt the histogram equalization enhancement amount to the variance, one can use a LUT (Look-Up-Table), which value is small for low and high variance value, but large for the variance in between. Therefore the curve of the LUT value vs. variance must be smooth enough so that the normal variance deviation among consecutive field images does not change the histogram equalization enhancement amount. Otherwise, the resulting image sequence would "jump" from field to field.

The preferred embodiments described above are preferably implemented as an application specific integrated circuit as known in the art, particularly the art of signal processors, for the sake of improving processing speed and mass manufacturability. Implementation in a digital signal processor is likely to result in a system bottleneck due to limitations in terms of bandwidth of current digital signal processors. Likewise, the preferred embodiments disclosed herein can be implemented in the form of a computer program product as known in the art, e.g. the arts of digital signal processing and computer programming.

**BEST MODE OF THE INVENTION**

The best mode of implementing the invention as currently contemplated by the inventors is as follows.

The mixing level is preferably chosen on the basis of the following parabolic curve, *i.e.* 2nd order polynomial, as the basic equation.

$$y = \frac{k_1 - k_2}{Max^2} \cdot 4 \cdot x^2 - \frac{k_1 - k_2}{Max} \cdot 4 \cdot x + k_1$$

In the above equation, "x" is the input (APL) value, whereas "$k_1$" and "$k_2$" are the maximum and minimum values of the parabolic curve at 0, "Max" and "Max/2," respectively. "Max" is the maximally allowed APL value, *i.e.* the APL range is 0 to "Max." The term "y" designates the mixing level.

The correction coefficient for mixing is preferably chosen as:

$$Correction = 1 - variance / maxvariance$$

where

$$maxvariance = \left(\frac{max\_Y\text{-}min\_Y}{2}\right)^2$$

The correction only applies if the APL value is below Max/2.

The final mixing level is determined according to the equation:

$$mix = MAX(MIN(y, k_1 + k_2 - y), 0) \bullet Correction^2$$

This bends the parabolic curve halfway between the minimum and the maximum at x=0 and applies the correction. Values below zero are clipped to zero. To obtain better picture quality, the correction coefficient is squared.

The concept of "best" can be applies to many areas such as computational load, picture quality, memory usage and, of course, trade-offs therebetween. For example, a look-up table can yield better quality while imposing a lesser load, but uses much more memory. An interpolated look-up table can use less memory, but imposes a somewhat higher computational load and may not yield the highest quality image possible.

Other types of curves, other than parabolic, can be employed. These include linear (triangles), Gaussians and fourth order polynomials.

The above equations are deemed to yield the currently best implementation in terms of computational load and resultant image quality.

Further information with regard to the terminology used in this specification as well as the techniques and hardware typically employed for implementing the known features of the invention can be found in the documents cited in the bibliography at the end of this specification, the contents of which are incorporated herein by reference.

While the preferred and alternative embodiments of the present invention have been disclosed and described in detail herein, it will be apparent to those skilled in the art that various changes may be made to the configuration, operation and form of the invention without departing from the spirit and scope thereof. In particular, it is noted that the respective features of the invention, even those disclosed solely in combination with other features of the invention, may be combined in any configuration excepting those readily apparent to the person skilled in the art as nonsensical. Likewise, use of the singular and plural is solely indicative of a preference and is not to be interpreted as limiting. Except where the contrary is explicitly noted, the plural may be replaced by the singular and vice-versa.

**BIBLIOGRAPHY**

- W. K. Pratt, "Digital Image Processing," 2nd Edition, ISBN 0-471-85766-1, John Wiley & Sons, Inc. 1991
- Cornelis A. M. Jaspers, "Method and Circuit for Dividing an Input Signal into Amplitude Segment Signals and for Non-Linearity Processing the Amplitude Segment Signals on the Basis of the Value of each Amplitude Segment Signal," US Patent 5,537,071 A, 1996
- W. A. Fuss, R. Eschbach, "Image-Dependent Automatic Area of Interest Enhancement," US Patent 5,581,370 A, Dec. 1996
- Product Specification, SAA4979H, Philips Semiconductor, April 2000
- D. R. Tretter, "Image Processing System," European Patent Application EP 1 022 679 A2, July 2000
- R. Szeliski, "Locally Adapted Histogram Equalization," WO 01/26054 A2, 2001

**Claims**

1. A method of applying histogram equalization to an image, wherein
a degree of equalization is adapted as a function of a variance or standard deviation of one or more images.

2. The method of claim 1, wherein said degree of equalization is adapted as a function of an average picture level of one or more images.

3. The method of claim 2, wherein said average picture level is determined from the whole of one or more images or from one or more selected regions of interest in one or more images.

4. The method of any of the preceding claims, wherein said histogram equalization is based on a histogram or a cumulative distribution function derived therefrom, wherein said histogram is calculated from the whole of one or more images, from one or more selected regions of interest in one or more images and/or from edge pixels of one or more images.

5. The method of claim 4, wherein said histogram or said cumulative distribution function has been smoothed using a recursive low pass filter, a cascaded low pass filter and/or a zero-phase forward and backward low pass filter.

6. The method of any of the preceding claims, wherein said one or more images includes said image or consists solely of said image.

7. The method of any of the preceding claims, wherein
said application of histogram equalization comprises the mixing of histogram equalized image data to image data that has not been histogram equalized; and
a ratio with which said equalized image data is mixed to said non-equalized image data is limited to a predetermined minimum and/or to a predetermined maximum.

8. An apparatus for applying histogram equalization to an image, comprising:

    controlling means (20', 30) configured and adapted to adapt a degree of equalization as a function of a variance or standard deviation of one or more images.

9. The apparatus of claim 8, wherein said controlling means are configured and adapted to adapt said degree of equalization as a function of an average picture level of one or more images.

10. The apparatus of claim 9, comprising determining means (21) configured and adapted to determine said average picture level from the whole of one or more images or from one or more selected regions of interest in one or more images.

11. The apparatus of any of claims 8 to 10, comprising:

    histogram equalization means (15) configured and adapted to apply equalization to one or more images based on a histogram or a cumulative distribution function derived therefrom; and
    calculating means (12) configured and adapted to calculate said histogram from the whole of one or more images, from one or more selected regions of interest in one or more images and/or from edge pixels of one or more images.

12. The apparatus of claim 11, comprising a recursive low pass filter, a cascaded low pass filter and/or a zero-phase forward and backward low pass filter for smoothing said histogram or said cumulative distribution function.

13. The apparatus of any of claims 8 to 12, wherein said one or more images includes said image or consists solely of said image.

14. The apparatus of any claims 8 to 13, comprising
a mixer (30) configured and adapted for mixing histogram equalized image data to image data that has not been histogram equalized, wherein
a ratio with which said equalized image data is mixed to said non-equalized image data is limited to a predetermined minimum and/or to a predetermined maximum.

**15.** A computer program product, comprising computer program means for carrying out the method steps of any of claims 1-7 when executed on a computer, digital signal processor or the like.

Fig. 1:

Fig. 2:

EP 1 482 447 A1

input

| APL |

| Variance | σ

| MixingLevel calculation |

mixLevel

*Robust Logic Unit*

Fig. 3:

Fig. 4: 3D representation of the interrelationship between the parameters

**European Patent Office**

**EUROPEAN SEARCH REPORT**

Application Number

EP 03 01 2381

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BUZULOIU V ET AL: "ADAPTIVE-NEIGHBORHOOD HISTOGRAM EQUALIZATION OF COLOR IMAGES" JOURNAL OF ELECTRONIC IMAGING, SPIE + IS&T, US, vol. 10, no. 2, April 2001 (2001-04), pages 445-459, XP001086946 ISSN: 1017-9909 page 447, section 2.2.2 - page 449, left-column, line 41 page 448, Fig. 1 | 1,2,6,8, 9,13,15 | G06T5/40 |
| Y | | 3-5, 10-12 | |
| A | US 2003/035579 A1 (MIN KYUNG-SUN ET AL) 20 February 2003 (2003-02-20) * paragraph [0020] - paragraph [0025] * * claims 1-3,7-9 * | 1,2,6,8, 9,13,15 | |
| Y | * paragraph [0015] - paragraph [0016] * | 3-5, 10-12 | |
| Y | ALEX STARK J: "ADAPTIVE IMAGE CONTRAST ENHANCEMENT USING GENERALIZATIONS OF HISTOGRAM EQUALIZATION" IEEE TRANSACTIONS ON IMAGE PROCESSING, IEEE INC. NEW YORK, US, vol. 9, no. 5, May 2000 (2000-05), pages 889-896, XP000958400 ISSN: 1057-7149 page 891, secion II.C | 5,12 | TECHNICAL FIELDS SEARCHED (Int.Cl.7) G06T |
| A | page 892, section III.B | 7,14 | |

-/--

The present search report has been drawn up for all claims

| Place of search | Date of completion of the search | Examiner |
|---|---|---|
| The Hague | 23 August 2004 | Deltorn, J-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 01 2381

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| Y | JIA-GUU LEU: "IMAGE CONTRAST ENHANCEMENT BASED ON THE INTENSITIES OF EDGE PIXELS" CVGIP GRAPHICAL MODELS AND IMAGE PROCESSING, ACADEMIC PRESS, DULUTH, MA, US, vol. 54, no. 6, 1 November 1992 (1992-11-01), pages 497-506, XP000332318 ISSN: 1077-3169 page 497, right-column, line 33 - page 498, left-column, line 18 page 498, section 2 - page 499, left-column, line 4 page 499, section 3.3 - page 500, left-column, line 2 ----- | 4,11 | |
| A,D | EP 1 022 679 A (HEWLETT PACKARD CO) 26 July 2000 (2000-07-26) * page 10, line 2 - page 11, line 25 * ----- | 1,8,15 | |
| | | | TECHNICAL FIELDS SEARCHED (Int.Cl.7) |

The present search report has been drawn up for all claims

| Place of search | Date of completion of the search | Examiner |
|---|---|---|
| The Hague | 23 August 2004 | Deltorn, J-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 01 2381

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2004

| Patent document cited in search report | | Publication date | Patent family member(s) | | Publication date |
|---|---|---|---|---|---|
| US 2003035579 | A1 | 20-02-2003 | KR | 2003015948 A | 26-02-2003 |
| EP 1022679 | A | 26-07-2000 | US | 6463173 B1 | 08-10-2002 |
| | | | EP | 1022679 A2 | 26-07-2000 |
| | | | DE | 69614482 D1 | 20-09-2001 |
| | | | DE | 69614482 T2 | 22-11-2001 |
| | | | DE | 69631257 D1 | 05-02-2004 |
| | | | EP | 0772158 A2 | 07-05-1997 |
| | | | JP | 9149257 A | 06-06-1997 |

EPO FORM P0459

For more details about this annex : see Official Journal of the European Patent Office, No. 12/82